# EUROPÄISCHE PATENTSCHRIFT

(11) **EP 2 429 868 B1**
(45) Veröffentlichungstag und Bekanntmachung des Hinweises auf die Patenterteilung: **18.09.2013**
(21) Anmeldenummer: 10709511.9
(22) Anmeldetag: 18.03.2010
(51) Int. Cl.: B60S 1/04

(54) **BEFESTIGUNGSANORDNUNG**
FASTENING ARRANGEMENT
SYSTEME DE FIXATION

(30) Priorität: 13.05.2009 DE 102009003067
(43) Veröffentlichungstag der Anmeldung: 21.03.2012
(73) Patentinhaber: Robert Bosch GmbH, 70442 Stuttgart (DE)
(72) Erfinder: VIX, Patrick, F-67850 Offendorf (FR); RAPP, Juergen, 77886 Lauf (DE); ENZMANN, Oliver, 77830 Buehlertal (DE)
(86) Internationale Anmeldenummer: PCT/EP2010/053495
(87) Internationale Veröffentlichungsnummer: WO 2010/130481

(56) Entgegenhaltungen:
- EP-A2- 0 952 053
- EP-B1- 1 613 516
- FR-A1- 2 887 830
- US-A1- 2006 168 754

## Beschreibung

Die vorliegende Erfindung betrifft eine Befestigungsanordnung zur Befestigung einer Scheibenwischvorrichtung an einer Karosserie eines Kraftfahrzeuges mit einer Karosserieaufnahme, in die mindestens ein Verriegelungsstück formschlüssig eingesetzt oder einsetzbar ist, an welchem die Scheibenwischvorrichtung fixierbar oder fixiert ist, sowie eine Scheibenwischvorrichtung mit einer entsprechenden Befestigungsanordnung.

### Stand der Technik

Im Stand der Technik bekannte Befestigungen für Scheibenwischvorrichtungen weisen im Wesentlichen geschraubte Verbindungen auf. Dabei werden die Scheibenwischvorrichtungen meist an drei Fixpunkten verschraubt oder aber an einem Steckpunkt fixiert und an zwei weiteren Punkten verschraubt. Die Schraubverbindungen haben jedoch den Nachteil, dass bei der Montage der Scheibenwischvorrichtung an der Fahrzeugkarosserie zusätzliche teure Werkzeuge wie beispielsweise Drehmomentschrauber benötigt werden. Auch die Taktzeit ist relativ langsam, wodurch die Montagekosten steigen. Ferner muss für den Einsatz von Drehmomentschraubern bei der Konstruktion bereits eine ausreichende Zugänglichkeit der Anschraubpunkte berücksichtigt werden, was die Konstruktionsfreiheit vermindert. Zudem sind Schraubwerkzeuge oftmals sperrig, was den Einbau der Scheibenwischvorrichtung weiter erschwert.

Die Anmelderin hat daher in dem Dokument WO 2006/131567 A1 vorgeschlagen, die Scheibenwischvorrichtung mittels einer Klemmverbindung an einem Karosserieblech einer Fahrzeugkarosserie zu befestigen. Diese Vorrichtung bietet zwar eine Befestigungslösung, die die oben erwähnten Nachteile weitestgehend ausschließt, jedoch ist die Herstellung der Befestigungsanordnung mit dem Klemmmechanismus relativ teuer.

Es ist daher Aufgabe der vorliegenden Erfindung, eine Befestigungsanordnung und eine Scheibenwischvorrichtung bereitzustellen, die eine einfache und schnelle Montage der Scheibenwischvorrichtung an der Karosserie eines Kraftfahrzeuges ermöglicht und möglichst kostengünstig herstellbar ist.

FR-A-2 887 830 offenbart den Oberbegriff des Anspruchs 1.

### Offenbarung der Erfindung

Diese Aufgabe wird erfindungsgemäß dadurch gelöst, dass das Verriegelungsstück ein Verriegelungselement zur lösbaren Fixierung des Verriegelungsstücks in der Karosserieaufnahme aufweist, das so ausgebildet ist, dass das Verriegelungsstück in einer Montagestellung in die Karosserieaufnahme einsetzbar bzw. aus ihr entnehmbar ist und im montierten Zustand in eine Verriegelungsstellung überführbar ist, in welcher das Verriegelungselement ein Herausbewegen des Verriegelungsstücks aus der Karosserieaufnahme blockiert.

Die erfindung sieht vor, die Karosserie-aufnahme U-förmig auszubilden, wobei in deren einander gegenüberliegenden U-Schenkeln jeweils ein Befestigungsbereich mit einer Bohrung und einem Montageschlitz zur Aufnahme und lösbaren Fixierung des Verriegelungsstücks ausgebildet ist.

Mit der erfindungsgemäßen Befestigungsanordnung wird es möglich, das Verriegelungsstück manuell in eine entsprechend gestaltete Karosserieaufnahme einzusetzen und darin zu verriegeln, indem der Monteur das Verriegelungsstück beispielsweise durch einfaches Drehen um seine zentrale Achse aus der Montagestellung in die Verriegelungsstellung bringt.

Eine Möglichkeit, das Verriegelungsstück in die Karosserieaufnahme verliersicher einzusetzen, besteht darin, das Verriegelungsstück in begrenztem Maße komprimierbar auszuführen. Dazu kann die Karosserieaufnahme so ausgestaltet sein, dass das Verriegelungsstück in der Verriegelungsstellung in der Karosserieaufnahme vorgespannt ist. Dies kann beispielsweise dadurch erreicht werden, dass die Abmessungen des Verriegelungsstücks so ausgebildet sind, dass es leicht größer ist als der in der Karosserieaufnahme vorgesehene Einbauraum, was dazu führt, dass das Verriegelungsstück in der montierten Position komprimiert wird.

Zur Begrenzung der Komprimierbarkeit und damit des axialen Spiels kann eine Distanzhülse in dem Verbindungsstück vorgesehen sein. Die Distanzhülse kann so eingesetzt sein, dass sie zusätzlich den Verbindungsbereich zwischen Verriegelungsstück und Scheibenwischvorrichtung verstärkt.

In einem Ausführungsbeispiel ist das Verriegelungselement einteilig mit dem Verriegelungsstück ausgebildet. Dies führt vorteilhafterweise dazu, dass zum einen die Teilevielfalt der Befestigungsanordnung bzw. der Scheibenwischvorrichtung verringert ist und ein Losrütteln des Verriegelungselementes von oder aus dem Verriegelungsstück verhindert wird, was vorteilhafterweise dazu führt, dass sich das Verriegelungsstück nicht ungewollt aus der Karosserieaufnahme herausbewegen kann.

In einem alternativen Ausführungsbeispiel sind Verriegelungsstück und Verriegelungselement als getrennte Bauteile ausgeführt. Dabei kann das Verriegelungsstück zunächst in die Karosserieaufnahme eingesetzt werden und anschließend das Verriegelungselement auf das Verriegelungsstück aufgesteckt oder eingeschoben werden.

In einem weiteren Ausführungsbeispiel ist das Verriegelungselement während der Montage des Verriegelungsstücks innerhalb des Verriegelungsstücks verschiebbar gehalten und wird bei Erreichen der Verriegelungsstellung aus einer Montagestellung in eine Verriegelungsstellung verschoben und beispielsweise als eine Art Druckknopf durch eine Rastverbindung in dieser Position gehalten.

Um die Überführung des Verriegelungsstücks aus der Montagestellung die Verriegelungsstellung zu vereinfachen, kann in einem Ausführungsbeispiel ein Betätigungshebel an dem Verriegelungsstück vorgesehen sein, über den das Verriegelungselement in die Montagestellung bewegt wird.

Der Betätigungshebel kann aber auch so an dem Verriegelungsstück vorgesehen sein, dass es ein innerhalb des Verriegelungsstücks angeordnetes Verriegelungselement zur Überführung in die Verriegelungsstellung so verschiebt, dass es einen Vorsprung an dem Verriegelungsstück bildet, welcher ein Herausbewegen des Verriegelungsstücks aus der Karosserieaufnahme in der Verriegelungsstellung blockiert.

Zur einfachen und genauen Positionierung und/oder lösbaren Fixierung des Verbindungsstücks in der Karosserieaufnahme kann das Verbindungsstück mit einer Nut versehen sein, mit der es in einen an der Karosserieaufnahme ausgebildeten Befestigungsbereich einsteckbar ist.

Eine besonders einfache Ausführungsform der vorliegenden Erfindung sieht vor, das Verriegelungselement durch einen Vorsprung zu bilden, der so ausgebildet ist, dass das Verriegelungsstück in der Montagestellung entlang des Montageschlitzes hin und her bewegbar ist und beispielsweise durch Drehen um 90° in die Verriegelungsstellung überführt werden kann, in der der Vorsprung eine Bewegung des Verriegelungsstücks entlang des Montageschlitzes blockiert. Natürlich kann auch an jedem Endbereich des Verriegelungsstücks jeweils ein Vorsprung zur Bildung des Verriegelungselementes ausgebildet sein.

Zur einfachen Montage des Verriegelungsstücks in der Karosserieaufnahme kann die Karosserieaufnahme mit Auflaufflächen versehen sein. Dabei können die Auflaufflächen so beabstandet sein, dass das Verriegelungsstück durch die Bewegung entlang des Montageschlitzes automatisch vorgespannt wird.

Eine weitere Maßnahme der Vereinfachung der Positionierung sieht vor, den Montageschlitz mit einer Verjüngung auszubilden.

Um ein Klappern bzw. Rütteln der Scheibenwischvorrichtung an dem Verriegelungsstück zu verhindern, ist in einem weiteren Ausführungsbeispiel ein Dämpfungselement zwischen dem Verriegelungsstück und der Scheibenwischvorrichtung eingesetzt.

Zur Vereinfachung der Montage von Scheibenwischvorrichtung, insbesondere dessen Formrohr, und Verriegelungsstück kann das Verriegelungsstück axial geteilt ausgebildet sein und dabei mindestens zwei Verriegelungsabschnitte aufweisen, die axial relativ zueinander bewegbar und/oder zum Einsetzen in die Karosserieaufnahme in begrenztem Maße komprimierbar sind.

Eine besonders einfache Art, eine formschlüssige Verbindung zwischen den beiden Verriegelungsabschnitten bereitzustellen, sieht vor, dass einer der Verriegelungsabschnitte einen Zapfen aufweist, der in einer an dem anderen Verriegelungsabschnitt korrespondierend ausgebildeten Bohrung einsetzbar ist.

Insbesondere für den Fall, dass an beiden Verriegelungsabschnitten jeweils ein Vorsprung als Verriegelungselement ausgebildet ist, ist es notwendig, die beiden Verriegelungsabschnitte so auszubilden, dass sie drehfest miteinander verbunden sind, um gemeinsam aus einer Montagestellung in eine Verriegelungsstellung überführt werden zu können. Dazu ist in einem weiteren Ausführungsbeispiel der vorliegenden Erfindung vorteilhafterweise vorgesehen, dass die Verriegelungsabschnitte an den zueinander weisenden Flächen mit komplementär ausgebildeten Verzahnungen versehen sind, die im montierten Zustand der Verriegelungsabschnitte ineinandergreifen. Damit ist gewährleistet, dass bei Verdrehen des Verriegelungsstücks beispielsweise durch einen erfindungsgemäßen Befestigungshebel beide Verriegelungsabschnitte in gleicher Weise dem Drehvorgang unterworfen werden.

Hinsichtlich weiterer vorteilhafter Ausführungsformen der vorliegenden Erfindung wird auf die Unteransprüche sowie die nachfolgende Beschreibung eines Ausführungsbeispiels anhand der beiliegenden Zeichnung verwiesen.

### Ausführungsbeispiel

Es zeigt:
- Figur 1: eine schematische Teildarstellung einer Scheibenwischvorrichtung mit einer montierten erfindungsgemäßen Befestigungsanordnung;
- Figur 2: eine perspektivische Darstellung eines erfindungsgemäßen axial geteilten Verriegelungsstücks;
- Figur 3: einen Verriegelungsabschnitt des erfindungsgemäßen Verriegelungsstücks gemäß Figur 1;
- Figur 4: einen zweiten Verriegelungsabschnitt des Verriegelungsstücks gemäß Figur 1;
- Figur 5: eine perspektivische Teildarstellung des Verriegelungsabschnittes gemäß Figur 3 mit einem Verriegelungselement in der Form eines Vorsprungs;
- Figur 6: eine U-förmige Karosserieanbindung mit Anlaufflächen;
- Figur 7: eine erfindungsgemäße Befestigungsanordnung mit einem Verriegelungselement in der Montagestellung;
- Figur 8: eine erfindungsgemäße Befestigungsanordnung mit einem Verriegelungsstück in der Verriegelungsstellung;
- Figur 9: einen Querschnitt durch ein Befestigungselement im montierten Zustand; und
- Figur 10: einen Querschnitt durch ein Verriegelungsstück im vorgespannten Zustand.

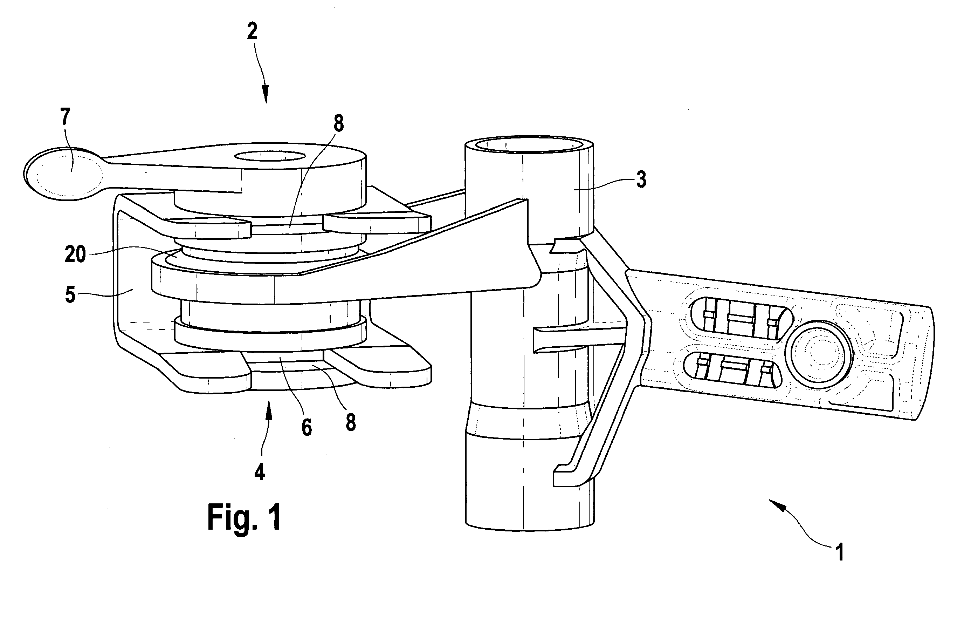

Die Figur 1 zeigt eine schematische Teildarstellung einer Scheibenwischvorrichtung 1 mit einer montierten erfindungsgemäßen Befestigungsanordnung 2. Die Scheibenwischvorrichtung ist über ein Formrohr 3, welches ein Verriegelungsstück 4 umgreift, an der Befestigungsanordnung 2 angebunden. Das Verriegelungsstück 4 ist in eine Karosserieaufnahme 5 der Befestigungsanordnung 2 eingesetzt, welche wiederum auf einfache Weise an einer nicht dargestellten Karosserie eines Kraftfahrzeuges befestigbar ist oder aber auch alternativ einteilig mit der Karosserie ausgebildet ist.

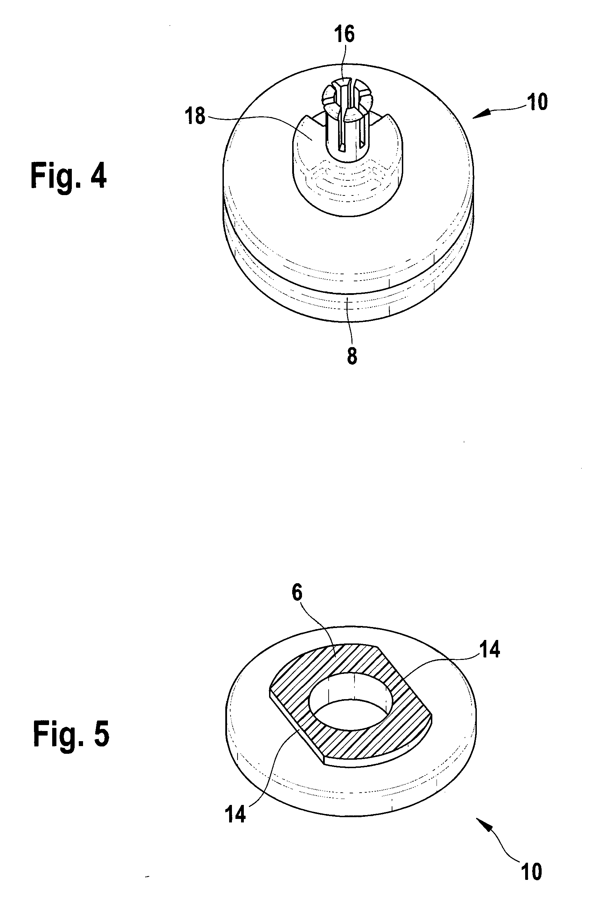

Das Verriegelungsstück 4 weist ein Verriegelungselement 6 in der Form eines Vorsprungs (siehe auch Figur 5) auf, um das Verriegelungsstück 4 in der Karosserieaufnahme 5 lösbar zu fixieren. Dazu ist der Vorsprung so ausgebildet, dass das Verriegelungsstück 4 in einer Montagestellung in die Karosserieaufnahme 5 einsetzbar bzw. aus ihr entnehmbar ist und im montierten Zustand durch Drehen des Verbindungsstücks um 90° um die Rotationsachse des Verbindungsstücks 4 in eine Verriegelungsstellung überführbar ist. In dieser Verriegelungsstellung verhindert das Verriegelungselement 6 ein Herausbewegen des Verriegelungsstücks 4 aus der Karosserieaufnahme 5. Das Verriegelungselement 6 ist in diesem Ausführungsbeispiel einteilig mit dem Verriegelungsstück 4 ausgebildet. Zur Überführung des Verriegelungsstücks 4 aus der Montagestellung in die Verriegelungsstellung ist ein Betätigungshebel 7 an dem Verriegelungsstück 4 vorgesehen. Um das Verbindungsstück 4 genau in der Karosserieaufnahme 5 zu positionieren und darin stabil zu halten, ist das Verbindungsstück 4 mit Nuten 8 versehen, mit denen das Verbindungsstück 4 in an der Karosserieaufnahme 5 ausgebildete Befestigungsbereiche 9 einsteckbar ist.

Das Verriegelungsstück 4 ist axial geteilt ausgebildet und weist zwei Verriegelungsabschnitte 10 auf, die axial relativ zueinander bewegbar und zum Einsetzen in die Karosserieaufnahme 5 in begrenztem Maße komprimierbar sind. Die Komprimierbarkeit kann durch Wahl des Werkstoffes der Verriegelungsabschnitte 10 erreicht und auch einstellbar sein. Ein geeigneter Werkstoff ist beispielsweise ein Kunststoff. Die Komprimierbarkeit ist jedoch nicht zwingend, so dass auch andere Werkstoffe, wie z.B. ein Metallwerkstoff geeignet sind, für ein Verriegelungsstück 4 eingesetzt zu werden.

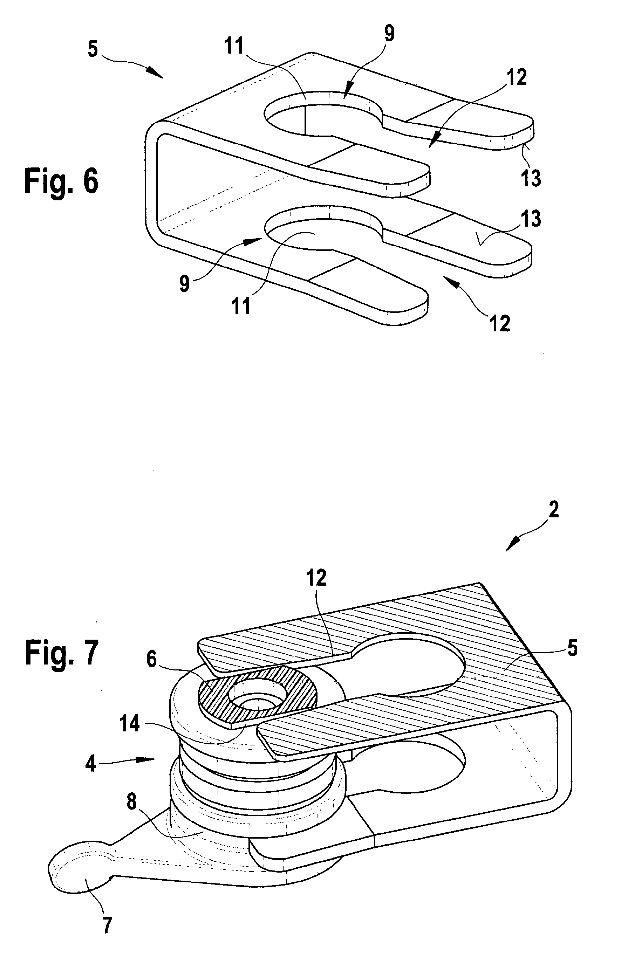

Die Karosserieaufnahme 5 ist in diesem Ausführungsbeispiel U-förmig ausgebildet. In den einander gegenüberliegenden U-Schenkeln ist jeweils ein Befestigungsbereich 9 mit einer Bohrung 11 und einem Montageschlitz 12 zur Aufnahme und lösbaren Fixierung des Verriegelungsstücks 4 ausgebildet (Figur 6). Zur einfachen Montage des Verriegelungsstücks 4 in der Karosserieaufnahme 5 ist die Karosserieaufnahme mit Auflaufflächen 13 versehen, die so beabstandet sind, dass das Verriegelungsstück 4 durch eine Bewegung entlang des Montageschlitzes 12 automatisch vorgespannt wird. Dies beugt einem Rappeln des Verriegelungsstücks in oder ein Lösen aus der Karosserieaufnahme 5 vor. Zur Vereinfachung der Positionierung ist der Montageschlitz 12 ferner mit einer leichten Verjüngung ausgebildet.

Die Figur 7 zeigt die Befestigungsanordnung 2 mit der U-förmigen Karosserieaufnahme 5, in die das in die Montagestellung gedrehte Verbindungsstück 4 eingesetzt ist. Das an dem Verbindungsstück 4 ausgebildete Verriegelungselement 6 weist in diesem Ausführungsbeispiel einen im Wesentlichen kreisförmigen Querschnitt mit zwei parallel verlaufenden Abflachungen 14 auf, deren Beabstandung der kleinsten Breite des Montageschlitzes 12 entspricht. Der Vorsprung ist so gedreht, dass sich das Verriegelungselement 6 ungehindert innerhalb des Montageschlitzes 12 hin und her bewegen lässt. Natürlich sind jedwede andere geometrische Ausgestaltungen des Verriegelungselementes 6 bzw. des Montageschlitzes 12 denkbar, die die Montage- und Verriegelungsfunktion erfüllen.

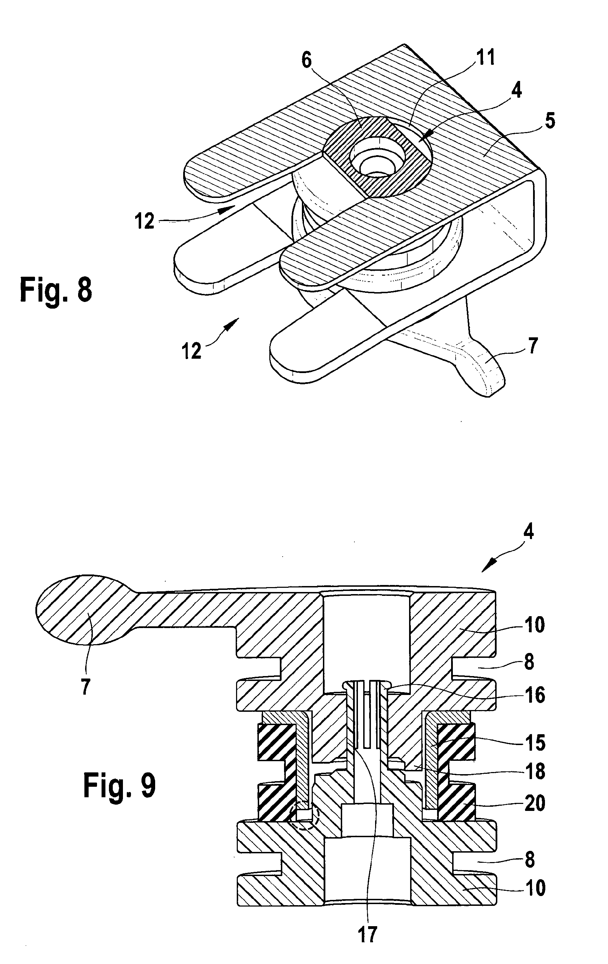

In Figur 8 ist die Befestigungsanordnung 2 in einer Lage gezeigt, bei der das Verriegelungsstück 4 in die Karosserieaufnahme 5 vollständig eingesetzt ist und über den Hebel 7 um 90° um die Rotationsachse gegenüber der in Figur 7 gezeigten Montagestellung gedreht wurde. Die Drehung des Verriegelungsstückes 4 hat zur Folge, dass die kreisbogenförmigen Abschnitte des Verriegelungselements 6 nunmehr über die Abmessungen des Montageschlitzes 12 herausstehen und so ein Bewegen des Verriegelungsstückes 4 innerhalb des Montageschlitzes 12 blockieren. Das Verriegelungsstück 4 ist somit in der Karosserieaufnahme 5 fixiert und kann lediglich durch ein erneutes Drehen des Verriegelungsstückes 4 in der Karosserieaufnahme 5 beispielsweise mittels des Betätigungshebels 7 wieder in die Montagestellung gebracht und im Anschluss aus der Karosserieaufnahme 5 entnommen werden.

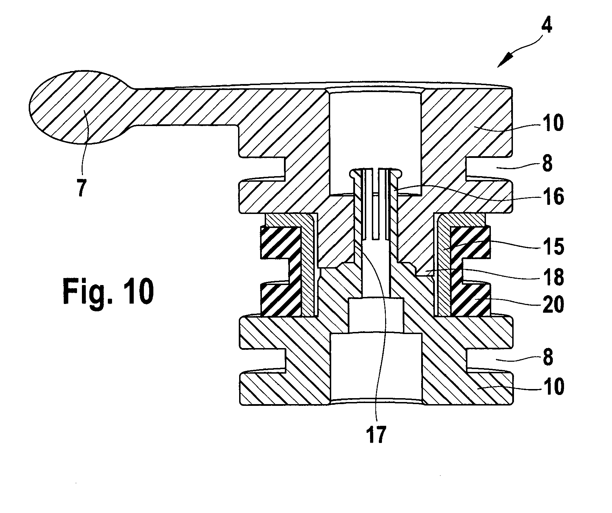

Die Figuren 9 und 10 zeigen das aus zwei Verriegelungsabschnitten 10 zusammengesetzte Verbindungsstück 4 im Querschnitt jeweils einmal im entspannten und im vorgespannten Zustand. Die Verriegelungsabschnitte 10 sind komprimierbar ausgebildet. Um die Komprimierbarkeit einstellen zu können, ist zwischen die beiden Verriegelungsabschnitte 10 eine Distanzbuchse 15 eingesetzt.

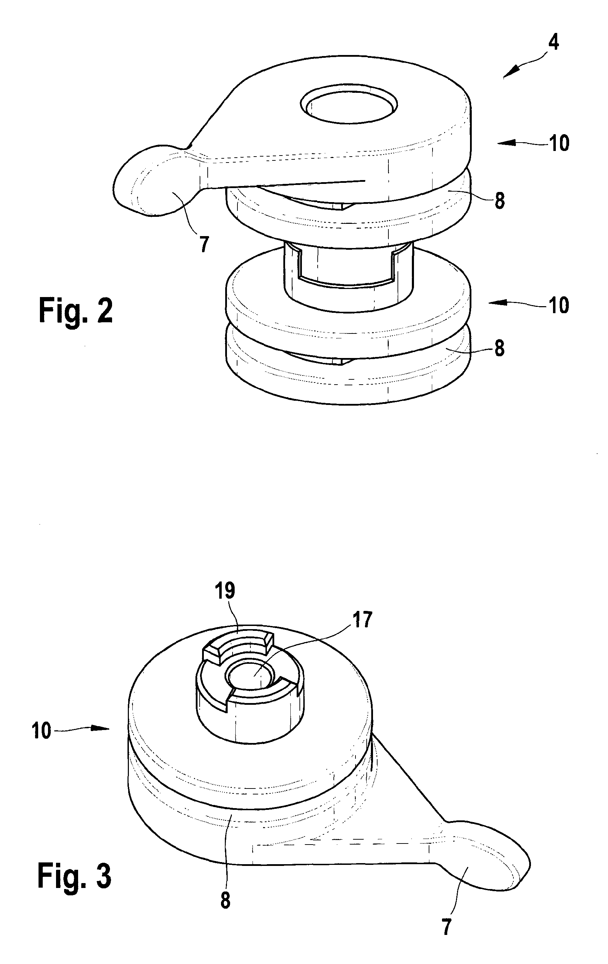

Wie bereits in den Figuren 3 und 4 ersichtlich, wird eine formschlüssige Verbindung zwischen den beiden Verriegelungsabschnitten 10 erreicht, indem der untere Verriegelungsabschnitt 10 einen Zapfen 16 aufweist, der in eine an dem oberen Verriegelungsabschnitt 10 korrespondierend ausgebildete Bohrung 17 eingesetzt ist. Um eine Verdrehfestigkeit der formschlüssigen Verbindung zu gewährleisten, sind an den zueinander weisenden Flächen der Verriegelungsabschnitt 10 komplementär ausgebildete Verzahnungen 18, 19 vorgesehen, die im montierten Zustand der Verriegelungsabschnitte 10 ineinandergreifen, so dass bei Verdrehen des Verriegelungsstücks 4 durch den Betätigungshebel 7 beide Verriegelungsabschnitte 10 in gleicher Weise dem Drehvorgang unterworfen werden.

Im unmontierten Zustand gemäß Figur 9 ist in dem mit einem Kreis gekennzeichneten Bereich ein Kompressionsweg vorgegeben, um den die Distanzbuchse 15 innerhalb des Verriegelungsstücks 4 bewegbar ist. Die Distanzbuchse 15 begrenzt auf diese Weise die Komprimierbarkeit des Verriegelungsstücks 4 und ist in diesem Ausführungsbeispiel so ausgebildet, dass sie im montierten Zustand wie in Figur 10 gezeigt, über den vollständigen Verbindungsbereich mit dem Formrohr 3 der Scheibenwischvorrichtung 1 hin erstreckt. Sie dient somit zusätzlich als Verstärkung des Verbindungsbereichs des Verriegelungsstücks 4 mit der Scheibenwischvorrichtung 1. Um ein Klappern bzw. Rütteln der Scheibenwischvorrichtung an dem Verriegelungsstück 4 zu verhindern, ist ein Dämpfungselement 20 zwischen dem Verriegelungsstück 4 und der Scheibenwischvorrichtung 1 eingesetzt.

## Patentansprüche

1. Befestigungsanordnung (2) zur Befestigung einer Scheibenwischvorrichtung (1) an einer Karosserie eines Kraftfahrzeuges mit einer Karosserieaufnahme (5), in die mindestens ein Verriegelungsstück (4) formschlüssig eingesetzt oder einsetzbar ist, an welchem die Scheibenwischvorrichtung (1) fixierbar oder fixiert ist, wobei das Verriegelungsstück (4) mindestens ein Verriegelungselement (6) zur lösbaren Fixierung des Verriegelungsstücks (4) in der Karosserieaufnahme (5) aufweist, das so ausgebildet ist, dass das Verriegelungsstück (4) in einer Montagestellung in die Karosserieaufnahme (5) einsetzbar bzw. aus ihr entnehmbar ist und im montierten Zustand in eine Verriegelungsstellung überführbar ist, in welcher das Verriegelungselement (6) ein Herausbewegen des Verriegelungsstücks (4) aus der Karosserieaufnahme (5) blockiert, **dadurch gekennzeichnet, dass** die Karosserieaufnahme (5) U-förmig ausgebildet ist, wobei in deren einander gegenüberliegenden U-Schenkeln jeweils ein Befestigungsbereich (9) mit einer Bohrung (11) und einem Montageschlitz (12) zur Aufnahme und lösbaren Fixierung des Verriegelungsstücks (4) ausgebildet ist.

2. Befestigungsanordnung (2) nach Anspruch 1, **dadurch gekennzeichnet, dass** das Verriegelungsstück (4) zum Einsetzen in die Karosserieaufnahme (5) in begrenztem Maße komprimierbar ist.

3. Befestigungsanordnung (2) nach Anspruch 1 oder 2, **dadurch gekennzeichnet, dass** das Verriegelungsstück (4) in der Verriegelungsstellung in der Karosserieaufnahme (5) vorgespannt ist.

4. Befestigungsanordnung (2) nach Anspruch 1, **dadurch gekennzeichnet, dass** das Verriegelungselement (6) einteilig mit dem Verriegelungsstück (4) ausgebildet ist.

5. Befestigungsanordnung (2) nach einem der vorhergehenden Ansprüche, **dadurch gekennzeichnet, dass** ein Betätigungshebel (7) zur Überführung des Verriegelungsstücks (4) aus der Montagestellung in die Verriegelungsstellung an dem Verriegelungsstück (4) vorgesehen ist.

6. Befestigungsanordnung (2) nach einem der vorhergehenden Ansprüche, **dadurch gekennzeichnet, dass** das Verriegelungsstück (4) zur Positionierung und/oder lösbaren Fixierung in der Karosserieaufnahme (5) mit einer Nut (8) versehen ist, mit der es in einen an der Karosserieaufnahme (6) ausgebildeten Befestigungsbereich (9) einsteckbar ist.

7. Befestigungsanordnung (2) nach Anspruch 1, **dadurch gekennzeichnet, dass** das Verriegelungselement (6) durch einen Vorsprung gebildet ist, der so ausgebildet ist, dass das Verriegelungsstück (4) in der Montagestellung entlang des Montageschlitzes (12) bewegbar ist und in die Verriegelungsstellung drehbar ist, in der der Vorsprung eine Bewegung des Verriegelungsstücks (4) entlang des Montageschlitzes (12) blockiert.

8. Befestigungsanordnung (2) nach einem der vorhergehenden Ansprüche, **dadurch gekennzeichnet, dass** die Karosserieaufnahme (5) angeschrägte Auflaufflächen (15) zur Vereinfachung der Montage des Verriegelungsstücks (4) in der Karosserieaufnahme (5) aufweist.

9. Befestigungsanordnung (2) nach Anspruch 8, **dadurch gekennzeichnet, dass** die Auflaufflächen (13) so beabstandet sind, dass das Verriegelungsstück (4) durch die Bewegung entlang des Montageschlitzes (12) automatisch vorspannbar ist.

10. Befestigungsanordnung (2) nach einem der vorhergehenden Ansprüche, **dadurch gekennzeichnet, dass** ein Dämpfungselement (20) zwischen dem Verriegelungsstück (4) und der Scheibenwischvorrichtung (1) eingesetzt ist.

11. Befestigungsanordnung (2) nach einem der vorhergehenden Ansprüche, **dadurch gekennzeichnet, dass** das Verriegelungsstück (4) axial geteilt ausgebildet ist und mindestens zwei Verriegelungsabschnitte (10) aufweist, die axial relativ zueinander bewegbar und/oder zum Einsetzen in die Karosserieaufnahme (5) in begrenztem Maße komprimierbar sind.

12. Befestigungsanordnung (2) nach Anspruch 11, **dadurch gekennzeichnet, dass** einer der Verriegelungsabschnitte (10) einen Zapfen (16) aufweist, der zur Bildung einer formschlüssigen Verbindung in eine in dem anderen Verriegelungsabschnitt (10) korrespondierend ausgebildete Bohrung (17) einsetzbar ist.

13. Befestigungsanordnung (2) nach Anspruch 11 oder 12, **dadurch gekennzeichnet, dass** die Verriegelungsabschnitte (10) zur Bildung einer verdrehfesten Verbindung an den zueinander weisenden Flächen mit komplementär ausgebildeten Verzahnungen (18, 19) versehen sind, die im montierten Zustand der Verriegelungsabschnitte (10) ineinander greifen.

14. Scheibenwischeranordnung mit einer Befestigungsanordnung (2) nach einem der vorherigen Ansprüche.

## Claims

1. Fastening arrangement (2) for fastening a window wiper device (1) to a motor vehicle body, with a body receptacle (5) into which at least one locking piece (4), to which the window wiper device (1) is fixable or is fixed, is inserted or is insertable in an interlocking manner, wherein the locking piece (4) has at least one locking element (6) for releasably fixing the locking piece (4) in the body receptacle (5), said locking element being designed in such a manner that the locking piece (4) is insertable in an installation position into the body receptacle (5) or is removable therefrom and, in the installed state, is transferable into a locking position in which the locking element (6) blocks the locking piece (4) from moving out of the body receptacle (5), **characterized in that** the body receptacle (5) is of U-shaped design, wherein a fastening region (9) having a bore (11) and an installation slot (12) for receiving and releasably fixing the locking piece (4) is formed in each of the mutually opposite U-limb of said body receptacle.

2. Fastening arrangement (2) according to Claim 1, **characterized in that** the locking piece (4) is compressible to a limited extent for inserting into the body receptacle (5).

3. Fastening arrangement (2) according to Claim 1 or 2, **characterized in that** the locking piece (4) is prestressed in the locking position in the body receptacle (5).

4. Fastening arrangement (2) according to Claim 1, **characterized in that** the locking element (6) is formed integrally with the locking piece (4).

5. Fastening arrangement (2) according to one of the preceding claims, **characterized in that** an actuating lever (7) for transferring the locking piece (4) from the installation position into the locking position is provided on the locking piece (4).

6. Fastening arrangement (2) according to one of the preceding claims, **characterized in that**, for positioning and/or releasable fixing in the body receptacle (5), the locking piece (4) is provided with a groove (8) with which said locking piece is insertable into a fastening region (9) formed on the body receptacle (6).

7. Fastening arrangement (2) according to Claim 1, **characterized in that** the locking element (6) is formed by a projection which is designed in such a manner that, in the installation position, the locking piece (4) is movable along the installation slot (12) and is rotatable into the locking position in which the projection blocks a movement of the locking piece (4) along the installation slot (12).

8. Fastening arrangement (2) according to one of the preceding claims, **characterized in that** the body receptacle (5) has bevelled run-on surfaces (15) for simplifying the installation of the locking piece (4) in the body receptacle (5).

9. Fastening arrangement (2) according to Claim 8, **characterized in that** the run-on surfaces (13) are spaced apart in such a manner that the locking piece (4) is automatically prestressable by the movement along the installation slot (12).

10. Fastening arrangement (2) according to one of the preceding claims, **characterized in that** a damping element (20) is inserted between the locking piece (4) and the window wiper device (1).

11. Fastening arrangement (2) according to one of the preceding claims, **characterized in that** the locking piece (4) is of axially divided design and has at least two locking sections (10) which are movable axially relative to each other and/or are compressible to a limited extent for inserting into the body receptacle (5).

12. Fastening arrangement (2) according to Claim 11, **characterized in that** one of the locking sections (10) has a pin (16) which, in order to form an interlocking connection, is insertable into a bore (17) formed in a corresponding manner in the other locking section (10).

13. Fastening arrangement (2) according to Claim 11 or 12, **characterized in that**, in order to form a torsionproof connection, the mutually facing surfaces of the locking sections (10) are provided with toothings (18, 19) which are of complementary design and intermesh in the installed state of the locking sections (10).

14. Window wiper arrangement with a fastening arrangement (2) according to one of the preceding claims.

## Revendications

1. Système de fixation (2) pour la fixation d'un dispositif d'essuie-glace (1) à une carrosserie d'un véhicule automobile comprenant un logement de carrosserie (5) dans lequel est insérée ou peut être insérée avec complémentarité de formes au moins une pièce de verrouillage (4) sur laquelle est fixé ou peut être fixé le dispositif d'essuieglace (1), la pièce de verrouillage (4) comprenant au moins un élément de verrouillage (6) pour la fixation libérable de la pièce de verrouillage (4) dans le logement de carrosserie (5), lequel élément de verrouillage est réalisé de telle sorte que la pièce de verrouillage (4) puisse, dans une position de montage, être insérée dans le logement de carrosserie (5) ou en être retirée et que l'on puisse la faire passer à une position de verrouillage à l'état monté, dans laquelle position de verrouillage l'élément de verrouillage (6) bloque un déplacement de la pièce de verrouillage (4) hors du logement de carrosserie (5), **caractérisé en ce que** le logement de carrosserie (5) est réalisé en forme de U, une région de fixation respective (9) pourvue d'un alésage (11) et d'une fente de montage (12) étant réalisée dans les branches de U en regard l'une de l'autre du logement de carrosserie, pour la réception et la fixation libérable de la pièce de verrouillage (4).

2. Système de fixation (2) selon la revendication 1, **caractérisé en ce que** la pièce de verrouillage (4) peut être comprimée dans une mesure limitée en vue de l'insertion dans le logement de carrosserie (5).

3. Système de fixation (2) selon la revendication 1 ou 2, **caractérisé en ce que** la pièce de verrouillage (4) est précontrainte dans le logement de carrosserie (5) à la position de verrouillage.

4. Système dé fixation (2) selon la revendication 1, **caractérisé en ce que** l'élément de verrouillage (6) est réalisé d'un seul tenant avec la pièce de verrouillage (4).

5. Système de fixation (2) selon l'une quelconque des revendications précédentes, **caractérisé en ce qu'**un levier d'actionnement (7) est prévu sur la pièce de verrouillage (4) pour faire passer la pièce de verrouillage (4) de la position de montage à la position de verrouillage.

6. Système de fixation (2) selon l'une quelconque des revendications précédentes, **caractérisé en ce que** la pièce de verrouillage (4) est pourvue d'une rainure (8) pour le positionnement et/ou la fixation libérable dans le logement de carrosserie (5), à l'aide de laquelle rainure la pièce de verrouillage peut être enfichée dans une région de fixation (9) réalisée sur le logement de carrosserie (6).

7. Système de fixation (2) selon la revendication 1, **caractérisé en ce que** l'élément de verrouillage (6) est formé par une saillie qui est réalisée de telle sorte que la pièce de verrouillage (4) soit mobile le long de la fente de montage (12) à la position de montage et soit rotative à la position de verrouillage à laquelle la saillie bloque un déplacement de la pièce de verrouillage (4) le long de la fente de montage (12).

8. Système de fixation (2) selon l'une quelconque des revendications précédentes, **caractérisé en ce que** le logement de carrosserie (5) comprend des surfaces en rampe chanfreinées (15) pour faciliter le montage de la pièce de verrouillage (4) dans le logement de carrosserie (5).

9. Système de fixation (2) selon la revendication 8, **caractérisé en ce que** les surfaces en rampe (13) sont espacées de telle sorte que la pièce de verrouillage (4) puisse être précontrainte automatiquement par le déplacement le long de la fente de montage (12).

10. Système de fixation (2) selon l'une quelconque des revendications précédentes, **caractérisé en ce qu'**un élément d'amortissement (20) est inséré entre la pièce de verrouillage (4) et le dispositif d'essuie-glace (1).

11. Système de fixation (2) selon l'une quelconque des revendications précédentes, **caractérisé en ce que** la pièce de verrouillage (4) est réalisée de manière divisée axialement et comprend au moins deux parties de verrouillage (10) qui sont mobiles axialement l'une par rapport à l'autre et/ou qui peuvent être comprimées dans une mesure limitée en vue de l'insertion dans le logement de carrosserie (5).

12. Système de fixation (2) selon la revendication 11, **caractérisé en ce que** l'une des parties de verrouillage (10) comprend un ergot (16) qui peut être inséré dans un alésage (17) réalisé de manière correspondante dans l'autre partie de verrouillage (10), pour former une liaison par engagement par complémentarité de formes.

13. Système de fixation (2) selon la revendication 11 ou 12, **caractérisé en ce que** les parties de verrouillage (10) sont pourvues, sur les surfaces en regard l'une de l'autre, de dentures (18, 19) réalisées de manière complémentaire qui s'engrènent l'une dans l'autre à l'état monté des parties de verrouillage (10) pour former une liaison solidaire en rotation.

14. Système d'essuie-glace comprenant un système de fixation (2) selon l'une quelconque des revendications précédentes.
